Europäisches Patentamt

European Patent Office

Office européen des brevets

(19)

(11) Veröffentlichungsnummer: **0 420 093 A2**

# (12) EUROPÄISCHE PATENTANMELDUNG

(21) Anmeldenummer: **90118282.4**

(22) Anmeldetag: **24.09.90**

(51) Int. Cl.5: **C08G 69/28, C08J 3/12**

(30) Priorität: **29.09.89 DE 3932554**

(43) Veröffentlichungstag der Anmeldung:
**03.04.91 Patentblatt 91/14**

(84) Benannte Vertragsstaaten:
**BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Pipper, Gunter**
**Schlangenthaler Weg 10**
**W-6702 Bad Duerkheim(DE)**
Erfinder: **Hildenbrand, Peter, Dr.**
**Heinrich-Heine-Ring 23**
**W-7500 Karlsruhe 51(DE)**
Erfinder: **Mueller, Wolfgang F., Dr.**
**Im Biengarten 45**
**W-6730 Neustadt(DE)**

(54) **Verfahren zur kontinuierlichen Herstellung von linearen hochmolekularen Polyamiden.**

(57) Verfahren zur kontinuierlichen Herstellung von linearen hochmolekularen Polyamiden mit geregeltem Gehalt an Amino- und Carboxylendgruppen, wobei man Polyamid in der Schmelze mit polyamidbildenden Diaminen oder Dicarbonsäuren unter fortlaufendem Durchmischen in einer verweilzeit von ≤ 10 Minuten umsetzt, das Polyamid granuliert und das so erhaltene Polyamidgranulat in fester Phase unter Mitverwendung von Inertgasen bis zur gewünschten Viskosität weiterkondensiert.

EP 0 420 093 A2

## VERFAHREN ZUR KONTINUIERLICHEN HERSTELLUNG VON LINEAREN HOCHMOLEKULAREN POLYAMI-DEN

Gegenstand der Erfindung ist ein Verfahren zur kontinuierlichen Herstellung von linearen hochmolekularen Polyamiden mit geregeltem Gehalt an Amino- und Carboxylendgruppen durch Umsetzen von Polyamiden mit Dicarbonsäuren oder Diaminen.

Bei der Herstellung von Polyamiden wie Polyamid 6 oder Polyamid 66 wird die Viskosität und der Gehalt an Endgruppen durch Zugabe von Kettenreglern beeinflußt. Aus Klare "Synthetische Fasern aus Polyamiden" Akademieverlag Berlin, 1963, Seiten 170, 194 und 215, ist bekannt, daß man neben Monocarbonsäuren und Monoaminen auch Dicarbonsäuren oder Diamine als Kettenregler verwendet und diese dem Polymerisationsansatz zugibt. Diese Arbeitsweise ist beim kontinuierlichen Verfahren nachteilig, da die Reaktionszeit bei erhöhtem Gehalt an Kettenreglern erhöht wird und ein rascher Wechsel der Endgruppeneinstellung mit einem großen Nachlauf verbunden ist. Zudem verdampfen z.B. Diamine zu einem nicht geringen Teil beim Abdestillieren des Wassers bei der Polykondensation, was zu unterschiedlichen Qualitäten führt. Darüber hinaus neigen Diamine zur Bildung von Triaminen, die als trifunktionelle Verbindungen zur Vernetzung und Bildung von Gelanteilen führen, wodurch die Qualität des Polyamids insbesondere für die Faserherstellung stark beeinträchtigt wird.

In der US-PS 2,174,527 wird zwar bereits beschrieben, daß man Kettenregler u.a. auch Dicarbonsäuren oder Diamine vor der Polymerisation, während der Polymerisation oder dem vorgefertigten Polyamid zugeben kann und anschließend in der Schmelze weiterkondensiert. Dieses Verfahren hat bislang in der Technik keinen Eingang gefunden, da die Nachkondensation in der Schmelze mit den vorgenannten Nachteilen verbunden ist.

Es war deshalb die technische Aufgabe gestellt, hochmolekulare lineare Polyamide mit einem gleichmäßigen Gehalt jeweils an Amino- und Carboxylendgruppen zur Verfügung zu stellen, wobei der Gehalt an Endgruppen je nach Bedarf rasch umstellbar sein soll ohne einen langen Nachlauf und Nachteile bei der Polykondensation in Kauf nehmen zu müssen. Darüber hinaus soll eine Gelbildung möglichst vermieden werden.

Diese Aufgabe wird gelöst in einem Verfahren zur kontinuierlichen Herstellung von linearen hochmolekularen Polyamiden mit geregeltem Gehalt an Amino- und Carboxylendgruppen durch Umsetzen von Polyamiden mit Dicarbonsäuren oder Diaminen in der Schmelze, wobei man

a) Polyamid mit einer relativen Viskosität von 2,0 bis 7,0. mit polyamidbildenden Diaminen oder Dicarbonsäuren in der Schmelze bei einer Temperatur von höchstens 50° C über dem Schmelzpunkt des jeweiligen Polyamids unter fortlaufendem Mischen unter Einhalten einer Verweilzeit von $\leq$ 10 min umsetzt,

b) das so erhaltene Polyamid in ein festes Granulat überführt und

c) das so erhaltene Polyamidgranulat in fester Phase unter Mitverwendung von Inertgas, bei einer Temperatur von 130° C bis 20° C unterhalb des Schmelzpunktes des jeweiligen Polyamids bis zur gewünschten Viskosität und dem gewünschten Endgruppengehalt weiter kondensiert.

Das neue Verfahren hat den Vorteil, daß man hochmolekulare lineare Polyamide kontinuierlich mit gleichmäßigem Gehalt jeweils an Amino- und Carboxylgruppen auf einfache Weise erhält, wobei der Gehalt je nach Bedarf rasch umstellbar ist ohne Kapazitätsverlust und langem Nachlauf. Ferner hat das neue Verfahren den Vorteil, daß eine gleichmäßige Qualität eingehalten wird und die Neigung zur Gelbildung vermindert wird.

Bevorzugt geht man von linearen Polyamiden aus, die aufgebaut sind aus Alkandicarbonsäuren mit 6 bis 12 Kohlenstoffatomen, insbesondere 6 bis 10 Kohlenstoffatomen, insbesondere geradkettigen $\alpha,\omega$-Alkandicarbonsäuren der genannten Kohlenstoffzahl, ferner Terephthalsäure oder Isophthalsäure. Besondere Bedeutung haben Adipinsäure, Sebacinsäure, Terephthalsäure und Isophthalsäure erlangt.

Zudem sind solche Polyamide aufgebaut aus Diaminen mit 4 bis 15 Kohlenstoffatomen, vorteilhaft aus Alkandiaminen mit 4 bis 12 Kohlenstoffatomen, insbesondere geradkettige $\alpha,w$-Diamine der genannten Kohlenstoffzahl. Ferner sind geeignete Diamine 4,4′-Diaminodicyclohexylmethan oder4,4′-Diaminocyclohexylpropan-(2,2). Geeignete geradkettige Diamine sind beispielsweise Hexamethylendiamin, Octamethylendiamin. Besondere technische Bedeutung hat Hexamethylendiamin erlangt.

Andere bevorzugte Polyamide sind aufgebaut aus Lactamen mit 7 bis 13 Ringgliedern wie Caprolactam oder Laurinlactam. Besondere technische Bedeutung hat Polycaprolactam erlangt.

Geeignet sind auch Copolymere aus den obengenannten Diaminen und Dicarbonsäuren sowie den genannten Lactamen.

Die Polyamide sind durch Polykondensation der Ausgangsstoffe bei polyamidbildenden Temperaturen z. B. 220 bis 320° C erhältlich. Vorteilhaft wird die Polykondensation ohne Mitverwendung von Kettenreglern, wie Aminen oder Carbonsäuren durchgeführt. Zweckmäßig werden die schmelzflüssig anfallenden Polyamide unmittelbar der Stufe a) zugeführt.

Die verwendeten Polyamide haben eine relative Viskosität von 2,0 bis 7,0 insbesondere 2,3 bis 5,0. In der Regel weisen sie einen Gehalt an Aminoendgruppen und Carboxylendgruppen auf, der sich bei der Polykondensation einstellt.

Besondere technische Bedeutung haben Polyamid 6, Polyamid 66 sowie Polyamide aus Adipinsäure, Hexymethylendiamin und Terephthalsäure oder Adipinsäure, Hexamethylendiamin und Isophthalsäure erlangt.

In der Stufe a werden erfindungsgemäß die vorgenannten Polyamide mit polyamidbildenden Diaminen oder Dicarbonsäuren in der Schmelze bei einer Temperatur von höchstens 50° C über dem Schmelzpunkt des jeweiligen Polyamids unter fortlaufendem Mischen, in einer Verweilzeit von ≤ 10 min umgesetzt.

Bevorzugte Diamine sind aliphatische oder cycloaliphatische primäre Diamine mit 6 bis 15 Kohlenstoffatomen, die abgesehen von den Aminogruppen Kohlenwasserstoffstruktur haben, insbesondere Alkandiamine mit 6 bis 12 Kohlenstoffatomen, vorteilhaft mit 6 bis 10 Kohlenstoffatomen, insbesondere geradkettige $\alpha,\omega$-Diamine der genannten Kohlenstoffzahl wie Hexamethylendiamin und Octamethylendiamin. Ferner sind geeignet 4,4´-Diaminodicyclohexylmethan oder 4,4´-Diaminodicyclohexylpropan-(2,2). Besonders bevorzugt ist Hexamethylendiamin.

Bevorzugte Dicarbonsäuren sind Alkandicarbonsäuren mit 6 bis 12, insbesondere 6 bis 10 Kohlenstoffatomen insbesondere geradkettige $\alpha,\omega$-Dicarbonsäure mit der genannten Kohlenstoffzahl oder Terephthalsäure und Isophthalsäure. Besonders bevorzugt sind Adipinsäure, Terephthalsäure und Isophthalsäure.

Zweckmäßig verwendet man Diamine oder Dicarbonsäuren die als Bausteine im Polyamid bereits enthalten sind. Es versteht sich, daß man Dicarbonsäuren anwenden wird, wenn der Carboxylendgruppengehalt erhöht werden soll und andererseits Diamine verwendet werden, wenn beabsichtigt ist den Gehalt an Aminoendgruppen zu erhöhen. Polyamide mit einem erhöhten Gehalt an Carboxylgruppen eignen sich z. B. besonders für die Verstärkung mit Glasfasern, während Polyamide mit erhöhtem Aminoendgruppengehalt wegen ihrer verbesserten Anfärbbarkeit für Faserzwecke besondere Bedeutung erlangt haben.

In der Regel setzt man Dicarbonsäuren oder Diamine in einer Menge von 0,1 bis 2 insbesondere 0,1 bis 1,5 Gew.-% bezogen auf Polyamid zu. Die Menge richtet sich nach dem Gehalt an Carboxylendgruppen bzw. Aminoendgruppen der erzielt werden soll und der relativen Viskosität des verwendeten Polyamids. Durch die Umsetzung mit Dicarbonsäuren wird der Carboxylendgruppengehalt und mit Diaminen der Aminoendgruppengehalt des Polyamids erhöht und in jedem Falle dessen relative Viskosität erniedrigt.

Die Umsetzung erfolgt in der Schmelze bei einer Temperatur von höchstens 50° C über dem Schmelzpunkt des jeweiligen Polyamids. Vorteilhaft beträgt die Temperatur höchstens 30° C über dem Schmelzpunkt des jeweiligen Polyamids.

Die Umsetzung wird unter fortlaufender Durchmischung z. B. in einem Extruder insbesondere Extruder mittels Zwangsförderung oder statischen Mischern durchgeführt. Hierbei hält man eine Verweilzeit von ≤ 10 min z.B. von 0,5 bis 5 min insbesondere 0,5 bis 3 min ein, besonders bewährt hat sich eine Verweilzeit von 0,5 bis 2 min.

In der Regel werden gleichzeitig Hilfsstoffe wie Verstärkungsmittel z. B. Glasfasern oder Füllstoffe ferner Stabilisatoren oder Farbpigmente in wirksamen Mengen zugesetzt.

Das so erhaltene Polyamid steht mit der Endgruppensumme nahezu im Polyamidgleichgewicht, wobei die relative Viskosität stets niedriger ist als die des Ausgangspolyamids und einen Wert von vorteilhaft 1,5 insbesondere 1,8 nicht unterschreiten soll.

In der Stufe b wird das so erhaltene schmelzflüssige Polyamid in festes Granulat übergeführt. Dies erfolgt z. B. indem man die Schmelze in Stränge gießt, abkühlt und granuliert. Nach einer anderen Arbeitsweise im sogenannten Heißabschlag wird Schmelze unter Abkühlen granuliert. Das erhaltene Granulat hat in der Regel folgende Dimensionen 1 x 1,5 bis 3 x 4 mm.

Das so erhaltene Polyamidgranulat wird in Stufe c in fester Phase bis zur gewünschten Viskosität und dem gewünschten Endgruppengehalt weiter kondensiert und gleichzeitig getrocknet. Hierbei hält man eine Temperatur von 130° C bis 20° C insbesondere 150 bis 20° C unterhalb des Schmelzpunkts des jeweiligen Polyamids ein. Ferner wird die Festphasenkondensation unter Mitverwendung von Inertgasen wie Stickstoff oder Wasserdampf insbesondere überhitztem Wasserdampf, durchgeführt. Vorteilhaft führt man die Festphasenkondensation in einer schachtförmigen Zone durch, wobei man das Granulat von oben nach unten und Inertgase z. B. in überhitzten Wasserdampf von unten nach oben leitet. Die Verweilzeit richtet sich nach dem gewünschten Grad der Viskosität. Sofern die Polyamide Caprolactam als Baustein enthalten, hat sich die Festphasenkondensation unter Mitverwendung von überhitzten Wasserdampf besonders bewährt, da hierbei gleichzeitig eine Entfernung von Monomeren und Oligomeren erfolgt, die aus dem Wasserdampf am

3

oberen Ende der Kondensationszone wiederum durch Destillation zurückgewonnen werden können. Andererseits ist es auch möglich solche Polyamide nach dem Granulieren vor der Festphasenkondensation mit Wasser bei erhöhter Temperatur zu extrahieren.

Polyamide, die nach dem Verfahren der Erfindung erhältlich sind, eignen sich zur Herstellung von Fäden und Fasern ferner zur Herstellung von Formteilen durch Extrusionen oder Spritzguß. Insbesondere eignen sich Polyamide mit hohem Carboxylendgruppengehalt, die zusätzlich Verstärkungsmittel wie Glasfasern oder silikatische Füllstoffe enthalten, zur Herstellung von Formteilen.

Das Verfahren nach der Erfindung sei an folgenden Beispielen veranschaulicht.

Beispiel 1

Schmelzflüssiges Polyamid 6,6 mit einer relativen Viskosität von 3,34 und einem Carboxylendgruppengehalt von 49 Val./t und einem Aminoendgruppengehalt von 41 Val./t wird bei einer Temperatur von 282° C in einem Extruder mit 0,25 Gew.-% Adipinsäure, bezogen auf eingesetztes Polyamid innerhalb einer Verweilzeit von 90 Sekunden vermischt, dann in Stränge gegossen und granuliert. Das so erhaltene Granulat hatte eine relative Viskosität von 2,71, einen Carboxylendgruppengehalt von 86 Val./t und einen Aminoendgruppengehalt von 42 Val./t. Das Polyamid 6,6 Granulat wird dann im Gegenstrom mit überhitztem Wasserdampf bei einer Temperatur von 162° C für einen Zeitraum von 8 Std. im Gegenstrom in fester Phase weiterkondensiert. Man erhält ein Polyamid mit einer relativen Viskosität von 2,81, einem Carboxylendgruppengehalt von 80 Val./t und einen Aminoendgruppengehalt von 39 Val./t.

Beispiele 2 bis 4

Man verfährt wie im Beispiel 1 beschrieben, variiert jedoch die relative Viskosität des Ausgangspolyamids und die Zusätze an Adipinsäure. Einzelheiten sind aus der nachfolgenden Tabelle 1 zu entnehmen.

4

Tabelle 1

| Beisp. | Polyamid 6,6 Endgruppen Val./t | | | Zusatz Adipinsäure Gew.-% | Verweilzeit sec | nach Extrusion Endgruppen Val/t | | | nach Festphasenphasenkondensation | | nach Festphasenkondensation | | |
|---|---|---|---|---|---|---|---|---|---|---|---|---|---|
| | $\eta_{rel}$ | -COOH | -NH$_2$ | | | $\eta_{rel}$ | -COOH | -NH$_2$ | Zeit [h] | Temp. [°C] | $\eta_{rel}$ | -COOH | -NH$_2$ |
| 2 | 3,34 | 49 | 41 | 0,40 | 120 | 2,50 | 101 | 39 | 8 | 180 | 2,80 | 92 | 33 |
| 3 | 5,45 | 36 | 28 | 0,65 | 120 | 2,55 | 140 | 26 | 8 | 185 | 2,78 | 110 | 20 |
| 4 | 7,75 | 28 | 19 | 0,80 | 120 | 2,52 | 157 | 23 | 8 | 191 | 2,77 | 118 | 16 |

EP 0 420 093 A2

Beispiele 5, 6 und 7

Man verfährt wie im Beispiel 1 beschrieben, verwendet jedoch Hexamethylendiamin als Zusatz. Die Einzelheiten sind aus nachfolgender Tabelle 2 zu entnehmen.

Tabelle 2

| Beisp. | Polyamid 66 Endgruppen Val./t | | | Zusatz HMD Gew.-% | Verweilzeit sec | nach Extrusion Endgruppen Val/t | | | Festphasenkondensation: | | nach Festphasenkondensation Endgruppen Val/t | | |
|---|---|---|---|---|---|---|---|---|---|---|---|---|---|
| | $\eta_{rel}$ | -COOH | -NH$_2$ | | | $\eta_{rel}$ | -COOH | -NH$_2$ | Zeit [h] | Temp. [°C] | $\eta_{rel}$ | -COOH | -NH$_2$ |
| 5 | 3,33 | 51 | 42 | 0,75 | 120 | 2,50 | 47 | 105 | 8 | 175 | 2,78 | 38 | 92 |
| 6 | 5,45 | 28 | 19 | 0,90 | 120 | 2,65 | 23 | 149 | 8 | 179 | 2,79 | 16 | 119 |
| 7 | 7,5 | 28 | 19 | 1,20 | 120 | 2,30 | 23 | 157 | 8 | 194 | 2,79 | 10 | 128 |
| HMD = Hexamethylendiamin | | | | | | | | | | | | | |

EP 0 420 093 A2

Beispiele 8 bis 11

Eine Schmelze von Polycaprolactam wird mit Adipinsäure in einem statischen Mischer bei 275°C gemischt und umgesetzt und die Schmelze anschließend in Stränge gegossen, abgekühlt und granuliert. Das so erhaltene Granulat wird bei einer Temperatur von 166 - 170°C unter Mitverwendung von überhitztem Wasserdampf im Gegenstrom für ein Zeitraum von 8 Std. in fester Phasen kondensiert. Die Einzelheiten sind aus nachfolgender Tabelle 3 zu entnehmen.

EP 0 420 093 A2

Tabelle 3

| Bsp. | Endgruppen Val./t | | | Zusatz AS Gew.-% | Durchsatz kg/h | nach Extrusion Endgruppen Val/t | | | Versuch | Festphasenkondensation: | | nach Festphasenkondensation | | |
|---|---|---|---|---|---|---|---|---|---|---|---|---|---|---|
| | $\eta_{rel}$ | -COOH | -NH$_2$ | | | $\eta_{rel}$ | -COOH | -NH$_2$ | | Zeit [h] | Temp. [°C] | $\eta_{rel}$ | -COOH | -NH$_2$ |
| 8 | 2,66 | 60 | 38 | 0,32 | 30 | 2,46 | 92 | 35 | 8 | 8 | 170 | 2,72 | 79 | 21 |
| 9 | 2,68 | 61 | 41 | 0,32 | 30 | 2,48 | 90 | 38 | 9 | 8 | 167 | 2,76 | 78 | 22 |
| 10 | 2,68 | 61 | 41 | 0,32 | 40 | 2,50 | 97 | 34 | 10/11 | 8 | 166 | 2,77 | 79 | 22 |
| 11 | 2,68 | 61 | 41 | 0,32 | 50 | 2,52 | 98 | 35 | | 8 | 166 | 2,78 | 78 | 21 |
| AS = Adipinsäure | | | | | | | | | | | | | | |

**Ansprüche**

1. Verfahren zur kontinuierlichen Herstellung von linearen hochmolekularen Polyamiden mit geregeltem Gehalt an Amino- und Carboxylendgruppen durch Umsetzen von Polyamiden mit Dicarbonsäuren oder Diaminen in der Schmelze dadurch gekennzeichnet, daß man

a) Polyamid mit einer relativen Viskosität von 2,0 bis 7,0 mit polyamidbildenden Diaminen oder Dicarbonsäuren in der Schmelze bei einer Temperatur von höchstens 50°C über dem Schmelzpunkt des jeweiligen Polyamids unter fortlaufendem Mischen unter Einhalten einer Verweilzeit von ≦ 10 min umsetzt,

b) das so erhaltene Polyamid in festes Granulat überführt und

c) das so erhaltene Polyamidgranulat in fester Phase unter Mitverwendung von Inertgasen bei einer Temperatur von 130°C bis 20°C unterhalb des Schmelzpunktes des Polyamids bis zur gewünschten Viskosität und dem gewünschten Endgruppengehalt weiterkondensiert.

2. Verfahren nach Anspruch 1, dadurch gekennzeichnet, daß man zur Einstellung des Carboxylendgruppengehalts Adipinsäure, Sebazinsäure, Terephthalsäure oder Isophthalsäure verwendet.

3. Verfahren nach Anspruch 1, dadurch gekennzeichnet, daß man zur Einstellung des Aminoendgruppengehalts Hexamethylendiamin 4,4′-Diaminodicyclohexylpropan(2, 2) oder 4,4′-Diaminodicyclohexylmethan verwendet.

4. Verfahren nach den Ansprüchen 1 bis 3, dadurch gekennzeichnet, daß man Dicarbonsäuren oder Diamine in einer Menge von 0,1 bis 2 Gew.-% bezogen auf Polyamid zusetzt.

5. Verfahren nach den Ansprüchen 1 bis 4, dadurch gekennzeichnet, daß man in Stufe a eine Verweilzeit von 0,5 bis 2 min einhält.

6. Verfahren nach den Ansprüchen 1 bis 5, dadurch gekennzeichnet, daß man die Kondensation in fester Phase im Gegenstrom unter Mitverwendung von überhitztem Wasserdampf durchführt.